# EUROPÄISCHE PATENTSCHRIFT

(11) **EP 1 735 600 B1**
(45) Veröffentlichungstag und Bekanntmachung des Hinweises auf die Patenterteilung: **18.09.2019**
(21) Anmeldenummer: 05735616.4
(22) Anmeldetag: 14.04.2005
(51) Int. Cl.: G01F 1/84, G01F 15/02, F28D 1/06, F28F 3/12, F28D 21/00

(54) **WÄRMETAUSCHER ZUM TEMPERIEREN EINES INLINE-MESSGERÄTS**
HEAT EXCHANGER FOR CONTROLLING THE TEMPERATURE OF AN IN-LINE MEASURING DEVICE
ECHANGEUR THERMIQUE POUR TEMPERER UN APPAREIL DE MESURE EN LIGNE

(30) Priorität: 16.04.2004 DE 102004019255; 19.04.2004 DE 102004019390
(43) Veröffentlichungstag der Anmeldung: 27.12.2006
(73) Patentinhaber: Endress+Hauser Flowtec AG, 4153 Reinach (CH)
(72) Erfinder: FUCHS, Michael, 79427 Eschbach (DE); MOSER, Thierry, 68510 Sierentz (FR); UNTERSEH, Roland, 68300 St.Louis (FR); OUDOIRE, Patrick, 68360 Soultz (FR)
(74) Vertreter: Andres, Angelika Maria
(86) Internationale Anmeldenummer: PCT/EP2005/051659
(87) Internationale Veröffentlichungsnummer: WO 2005/100930

(56) Entgegenhaltungen:
- WO-A-99/58920
- CA-A1- 2 367 726
- FR-A- 2 237 156
- US-A- 3 335 789
- US-A- 4 584 868
- PATENT ABSTRACTS OF JAPAN Bd. 1995, Nr. 08, 29. September 1995 (1995-09-29) -& JP 07 120181 A (ZEXEL CORP), 12. Mai 1995 (1995-05-12)
- PATENT ABSTRACTS OF JAPAN Bd. 2000, Nr. 10, 17. November 2000 (2000-11-17) & JP 2000 205783 A (CALSONIC KANSEI CORP), 28. Juli 2000 (2000-07-28)

## Beschreibung

Die Erfindung betrifft die Verwendung eines In-Line-Meßgeräts zum Erfassen wenigstens einer, insb. physikalische, Meßgröße, insb. einen Massedurchfluß, eine Dichte und/oder eine Viskosität, eines in einer Rohrleitung geführten Mediums und zum Abbilden der wenigstens einen Meßgröße in ein diese momentan repräsentierendes Meßwertsignal sowie einer Vorrichtung zum Temperieren des In-Line-Meßgeräts.

In der industriellen Prozeß-Meßtechnik werden, insb. auch im Zusammenhang mit der Automatisierung chemischer oder verfahrenstechnischer Prozesse, zur Erzeugung von physikalische Meßgrößen repräsentierenden Meßwertsignalen vor Ort, also prozessnah, installierte Prozeß-Meßgeräte oder auch Feldmeßgeräte eingesetzt.

Für die Messung physikalischer Meßgrößen, wie z.B. einem Massen- und/oder Volumendurchfluß, einer Dichte, einer Viskosität etc., von in Rohrleitungen geführten Medien werden oftmals solche Prozeß-Meßgeräte verwendet, die die erforderliche physikalisch-zu-elektrische Wandlung der Meßgröße mittels eines in den Verlauf der mediumsführenden Rohrleitungen eingesetzten, im Betrieb vom Medium durchströmten physikalisch-elektrischen Meßaufnehmers und einer daran angeschlossenen Meßgerät-Elektronik bewirken. Zum Erfassen der jeweiligen Meßgrößen weisen solche Prozeß-Meßgeräte - im folgenden kurz In-Line-Meßgeräte - zumeist Messaufnehmer mit wenigstens einem direkt in den Verlauf der Rohrleitung eingesetzten Messrohr auf. Beispiele für derartige, dem Fachmann hinreichend bekannte In-Line-Meßgeräte sind in der der US-B 66 91 583, der US-B 64 50 042, der US-B 63 54 154, der US-B 63 52 000, der US-B 63 08 580, der US-A 60 06 609, der US-A 60 03 384, der US-A 59 79 246, der US-A 58 50 039, der US-A 57 96 011, der US-A 56 02 345, der US-A 53 01 557, der US-A 47 68 384, der WO-A 03 095 950, der WO-A 03 095 949 oder der WO-A 95 16 897 detailiert beschrieben. Bei den jeweils zu erfassenden Meßgrößen kann es sich z.B. um einen Massendurchfluß, eine Dichte, eine Viskosität, einen Druck oder eine Temperatur oder dergleichen, eines flüssigen, pulver-, dampf- oder gasförmigen Prozeß-Mediums handeln.

Für eine zumeist zentralisierte Auswertung der erfassten Meßgrößen sind Prozeß-Meßgeräte der beschriebenen Art zudem üblicherweise über ein an die Meßgerät-Elektronik angeschlossenes Datenübertragungs-System miteinander und/oder mit entsprechenden Prozeß-Leitrechnern verbunden, wohin sie die Meßwertsignale z.B. via (4 bis 20 mA-) Stromschleife und/oder via digitalen Daten-Bus senden. Als Datenübertragungs-Systeme können hierbei, insb. serielle, Feldbus-Systeme, wie z.B. PROFIBUS-PA, FOUNDATION FIELDBUS sowie die entsprechenden Übertragungs-Protokolle dienen. Mittels der Prozeß-Leitrechner können die übertragenen Meßwertsignale weiterverarbeitet und als entsprechende Meßergebnisse z.B. auf Monitoren visualisiert und/oder in Steuersignale für Prozeß-Stellglieder, wie z.B. Magnet-Ventile, Elektro-Motoren etc., umgewandelt werden. Zur Aufnahme der Meßgerät-Elektronik umfassen solche Prozeß-Meßgeräte ferner ein Elektronik-Gehäuse, das, wie z.B. in der US-A 63 97 683 oder der WO-A 00 36 379 vorgeschlagen, vom Prozeß-Meßgerät entfernt angeordnet und mit diesem nur über eine flexible Leitung verbunden sein kann oder das, wie z.B. auch in der EP-A 903 651 oder der EP-A 1 008 836 gezeigt, direkt am Meßaufnehmer oder einem den Meßaufnehmer separat einhausenden Meßaufnehmer-Gehäuse angeordnet ist. Oftmals dient dann das Elektronik-Gehäuse, wie beispielsweise in der EP-A 984 248, der US-A 45 94 584, der US-A 47 16 770 oder der US-A 63 52 000 gezeigt, auch dazu, einige mechanische Komponenten des Meßaufnehmers mit aufzunehmen, wie z.B. sich unter mechanischer Einwirkung betriebsmäßig verformende membran-, stab-, hülsen- oder rohrförmige Deformation- oder Vibrationskörper, vgl. hierzu auch die eingangs erwähnte US-B 63 52 000.

Aufgrund ihres breiten Anwendungsspektrums haben sich für die Messung von in Rohrleitungen strömenden Medien im besonderen In-Line-Meßgeräte mit Messaufnehmern vom Vibrationstyp bewährt, die mittels wenigstens einem im Betrieb vibrierenden Messrohr mechanische Reaktionskräfte im hindurchströmenden Medium bewirken, beispielsweise mit dem Massendurchfluß korrespondierende Corioliskräfte, mit der Dichte des Mediums korrespondierende Trägheitskräfte und/oder mit der Viskosität korrespondierende Reibungskräfte. Derartige In-Line-Meßgeräte sowie deren Wirkungsweise sind dem Fachmann ebenfalls geläufig und z.B. in den bereits erwähnten US-B 66 91 583, US-B 64 50 042, US-B 63 54 154, US-B 63 08 580, US-A 60 06 609, US-A 59 79 246, US-A 58 50 039, US-A 57 96 011, US-A 56 02 345, US-A 53 01 557, US-A 48 76 898 US-A 47 68 384, WO-A 03 095 950, WO-A 03 095 949, WO-A 02 088 641 oder WO-A 95 16 897 ausführlich und detailiert beschrieben.

Zum Führen des Mediums umfassen solche Meßaufnehmer vom Vibrationstyp jeweils mindestens ein in einem, beispielsweise rohr- oder kastenförmigen, Tragrahmen gehaltertes Meßrohr mit einem gebogenen oder geraden Rohrsegment, das zum Erzeugen oben genannter Reaktionskräfte im Betrieb - angetrieben von einer elektro-mechanischen Erregeranordnung - in einem geeigneten Schwingungsmode vibrieren gelassen wird. Zum Erfassen von Vibrationen des Rohrsegments weisen die Meßaufnehmer ferner jeweils eine auf Bewegungen des vibrierenden Rohrsegments reagierende Sensoranordnung mit physikalisch-elektrischen, zumeist elektrodynamischen oder opto-elektronischen, Schwingungssensoren auf, die örtliche Schwingungen des Messrohrs repräsentierende Schwingungsmesssignale liefern.

Das wenigstens eine Meßrohr sowie die Erreger- und die Sensoranordnung sind von einer mit dem Tragrahmen verbundenen, insb. mit diesem verschweißten, oder in diesen inetgrierten Gehäusekappe umgeben. Das so gebildete Messaufnehmer-Gehäuse dient neben der Halterung des wenigstens einen Meßrohrs u.a. auch dazu, dieses, die Erreger- und die Sensoranordnung sowie andere innenliegenden Bauteile vor äußeren Umwelteinflüssen, wie z.B. Staub oder Spritzwasser, zu schützen oder auch Schallemissionen des Messaufnehmers zu unterdrücken.

Für den Fall, daß das In-Line-Meßgerät als Coriolis-Massendurchflußmesser eingesetzt wird, ermittelt die Meßgerät-Elektronik u.a. wiederholt eine Phasendifferenz zwischen Schwingungsmesssignalen, die von zwei voneinander beabstandeten Schwingungssensoren geliefert werden, und gibt die Meßgerät-Elektronik an ihrem Ausgang ein Meßwertsignal ab, das, mit dem zeitlichen Verlauf der ermittelten Phasendifferenz korrespondierend, einen Meßwert des Massendurchflusses darstellt. Darüberhinaus kann mittels eines solchen In-Line-Meßgeräts, wie auch in der eingangs referierten WO-A 95/16897, US-A 45 24 610 oder US-A 41 87 721 beschreiben, die momentane Dichte des strömenden Mediums gemessen werden, und zwar anhand einer Frequenz wenigstens eines der von der Sensoranordnung gelieferten Schwingungsmeßsignale. Weiters kann mittels solcher In-Line-Messgeräte auch eine Viskosität und/oder ein Viskositäts-Dichte-Produkt des im vibrierenden Messrohr befindlichen Mediums direkt gemessen werden, vgl. hierzu insb. die US-B 66 51 513, die US-A 55 31 126, die US-A 52 53 533, die US-A 45 24 610 oder die WO-A 95/16897. Überdies wird allein schon zum Zwecke allfällig erforderlicher Kompensationen von Temperatureffekten bei der Schwingungsmessung zumeist auch eine Temperatur des Mediums und/oder einzelner Komponenten des Messaufnehmers in geeigneter Weise direkt gemessen, beispielsweise mittels am Meßrohr und/oder am Gehäuse angeordneter Temperatursensoren.

Beim Einsatz von In-Line-Meßgeräten in Anwendungen, bei denen das zu messende Medium, beispielsweise erhitzte Kohlen-Wasserstoff-Verbindungen oder dergleichen, möglichst genau innerhalb eines vorbestimmten Temperaturbereichs zu halten ist, ist es oftmals erforderlich, auch das In-Line-Meßgerät in geeigneter Weise zu Temperieren, beispielsweise durch Fremdbeheizung oder Fremdkühlung. Zum Temperieren von In-Line-Meßgeräten, also zum Zu- oder Abführen von Wärme, haben sich im besonderen solche Vorrichtungen bewährt, die ein in entsprechendes, vor Ort installiertes, ein geeignetes Temperierfluid, wie z.B. Wasser, Wasser-Dampf, Öl oder dergleichen, führendes Temperier-Leitungssystem einzubinden sind. Solche Vorrichtungen zum Temperieren von In-Line-Meßgeräten sind seit längerem am Markt erhältlich.

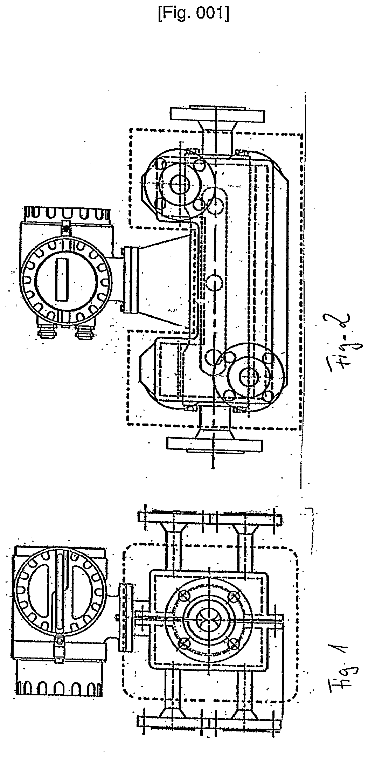

Eine seitens der Anmelderin selbst angebotene - durchaus als repräsentativ für die derzeit geläufigen Temperier-Vorrichtungen anzusehende - Vorrichtungen weist beispielsweise, wie auch in Fig. 1 und 2 schematische dargestellt, zwei Wärmetauscher mit jeweils einem an das Temperier-Leitungssystem anschließbaren Hohlraum auf, die mittels geeigneter Befestigungsmittel von außen an das In-Line-Meßgrät - meßprinzipbedingt hier direkt an das Meßaufnehmer-Gehäuse - einander gegenüberliegend montierbar sind. Jeder der beiden Wärmetauscher weist dafür eine das In-Line-Meßgerät von außen zumindest teilweise flächig kontaktierende, mit der Außenkontur des In-Line-Meßgeräts entsprechend korrespondierende Innenwand. An die Innenwand ist eine im wesentlichen kastenförmige Außenwand unter Bildung des dazwischenliegenden Hohlraums angeschweißt. Zum Temperieren des In-Line-Meßgeräts sind die beiden Hohlräume im Betrieb von einem Temperierfluid durchströmt.

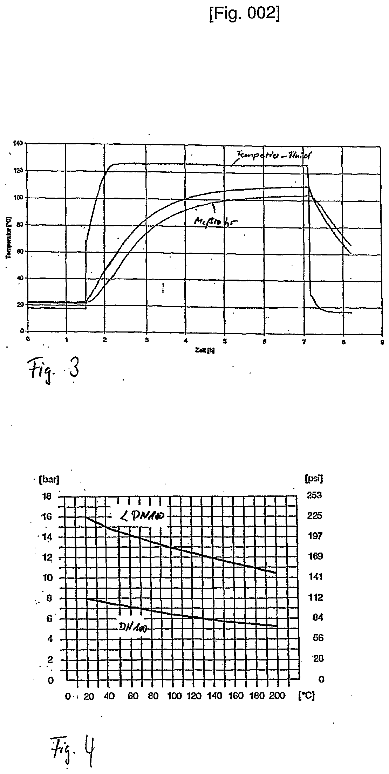

Ein Nachteil derartig aufgebauter Temperier-Vorrichtungen ist zum einen in dem eher ungünstig ausgebildeten Volumen des das Temperierfluids Hohlraums zu sehen. Größe und Form des gezeigten Hohlraums führen nämlich dazu, das die Temperier-Vorrichtung in Bezug auf das Durchgreifen von Temperaturänderungen innerhalb des Hohlraums auf die Innenwand eine sehr große thermische Trägheit, *ergo* eine sehr geringe Dynamik aufweist. Darüberhinaus bilden sich innerhalb des Hohlraums in erheblichem Tot-Volumina aus, in denen Temperierfluid kaum oder gar nicht zirkuliert. Auch ist eine gezielte Führung der Strömung des Temeprierfluids nicht vorgesehen. Dementsprechend besitzen derartige Vorrichtung, wie auch aus den in Fig. 3 gezeigten, experimentell bestimmten Temperaturverläufen ersichtlich, zumeist einen sehr niedrigen thermischen Wirkungsgrad bei vergleichsweise niedriger Heiz- oder Kühlleistung. Außerdem besitzen derartige Vorrichtung üblicherweise auch ein sehr hohes Gewicht, das etwa im Bereich von bis 100% des nominellen Gewichts des zu temperierenden In-Line-Meßgeräts, also bei etwa 100 kg oder sogar darüber, liegen kann. Desweiteren bedingt die im Hinblick auf die Wärmeisolation eher ungünstige geformte Außenwand mit ihrer vergleichsweise großen Oberfläche einen hohen Wärmedämmungsaufwand.

Ein weitere Nachteil solcher Temperier-Vorrichtung besteht darin, daß sie eine eher niedrige nominelle Druckfestigkeit aufweisen, die, wie in Fig. 4 exemplarisch für die oben beschriebene Vorrichtung mit In-Line-Meßgreäten für Nennweiten DN ≤ 100 mm gezeigt, bei zunehmender Temperatur aufgrund von Materialentfestigungen zudem erheblich absinken kann. Darüberhinaus führen die großen Volumina der Hohlräume von zumeist deutlich über 20 1 dazu, daß die verwendeten Wärmetauscher erhöhten Anforderungen hinsichtlich ihrer Druckfestigkeit und der Festigkeitsprüfung unterliegen. Infolgedessen ist eine Einsatz solcher Vorrichtungen oftmals lediglich für Anwendungen von vergleichsweise niedrigen Temperaturen, beispielsweise von unter 200°C, und/oder innerhalb von Temperier-Leitungssystem mit einem niedrigen Druck, beispielsweise von unter 3 bar, zulässig.

Jede einzelne Temperier-Vorrichtungen der beschriebenen Art ist infolge dessen sehr aufwendig und daher nur in Einzel- oder Kleinstserien-Fertigung herzustellen.

Eine Aufgabe der Erfindung besteht daher darin, eine dem Temprieren von In-Line-Meßgeräten dienende Vorrichtung sowie und einen für eine solche Vorrichtung geeigneten Wärmetauscher anzugeben, die bei vergleichsweise hoher Druck- und Temperaturfestigkeit einen hohen thermischen Wirkungsgrad aufweist. Darüberhinaus soll die Vorrichtung einfach zu fertigen und somit zumindest auch für die Serienfertigung geeignet sein.

Zur Lösung der Aufgaben besteht die Erfindung in einer Verwendung eines In-Line-Meßgeräts zum Erfassen wenigstens einer, insb. physikalische, Meßgröße, insb. einen Massedurchfluß, eine Dichte und/oder eine Viskosität, eines in einer Rohrleitung geführten Mediums und zum Abbilden der wenigstens einen Meßgröße in ein diese momentan repräsentierendes Meßwertsignal sowie einer Vorrichtung zum Temperieren eines In-Line-Meßgeräts mit wenigstens einem in den Verlauf einer Prozeß-Leitung eingesetzten, dem Führen eines zu messenden Prozeßfluids dienenden Messrohr, wobei das In-Line-Meßgerät einen, insb. innerhalb eines Meßaufnehmer-Gehäuses untergebrachten, Meßaufnehmer vom Vibrationstyp umfasst; und wobei die Vorrichtung umfasst:
- wenigstens einen am In-Line-Meßgerät befestigten ersten Wärmetauscher, der im Betrieb zumindest zeitweise von einem dem Transport von Wärme dienenden Temperierfluid durchströmt ist, sowie
- Befestigungsmittel zum, insb. wieder lösbaren, Fixieren des wenigstens ersten Wärmetauschers außen am In-Line-Meßgerät,
- wobei der Wärmetauscher eine das In-Line-Meßgerät von außen zumindest teilweise flächig kontaktierende, insb. rinnen- oder schalenförmig gewölbte, Innenwand sowie eine daran fixierte Außenwand aufweist,
- wobei die Außenwand mit der Innenwand über eine entlang eines Randbereichs verlaufende, für das Temperierfluid dichte Rand-Verbindungsnaht sowie über eine Vielzahl von, insb. punkt- oder ringförmigen, Innen-Verbindungsstellen, die voneinander beabstandet in einem von der Rand-Verbindungsnaht zumindest teilweise umschlossenen Innenbereich angeordnet sind, derart verbunden ist, daß zwischen der Innenwand und der Außenwand wenigstens ein dem Führen des Temperierfluids dienender, eine Vielzahl von miteinander kommunizierenden Sektionen aufweisender Hohlraum gebildet ist, und
- wobei der Hohlraum über darin einmündende Öffnungen in ein das Temperierfluid führendes Temperier-Leitungssystem eingebunden ist.

Nach einer ersten Ausgestaltung der Erfindung ist der erste Wärmetauscher im wesentlichen kraftschlüssig am In-Line-Meßgerät befestigt.

Nach einer zweiten Ausgestaltung der Erfindung umfasst die Vorrichtung weiters einen, insb. zum ersten Wärmetauscher im wesentlichen baugleich ausgebildeten, zweiten Wärmetauscher, wobei die Befestigungsmittel auch dem, insb. wieder
lösbaren, Fixieren des zweiten Wärmetauschers außen am In-Line-Meßgerät dienen.

Nach einer dritten Ausgestaltung der Erfindung dienen die Befestigungsmittel dem kraftschlüssigen Fixieren der beiden Wärmetauscher.

Nach einer vierten Ausgestaltung der Erfindung sind die Befestigungsmittel zumindest teilweise als integraler Bestandteil des ersten und/oder des zweiten Wärmetauschers ausgebildet.

Nach einer fünften Ausgestaltung der Erfindung sind die beiden Wärmetauscher mittels der Befestigungsmittel miteinander mechanisch verbunden.

Nach einer sechsten Ausgestaltung der Erfindung sind die beiden Wärmetauscher einander gegenübeliegend am In-Line-Meßgeräts angeordnet.

Nach einer siebenten Ausgestaltung der Erfindung ist die Rand-Verbindungsnaht in sich geschlossen.

Die erfindungsgemäß verwendete Vorrichtung zeichnet sich aufgrund des sehr kleine Volumens des Hohlraums bei einer vergleichsweise großen Kontaktfläche im besonderen durch einen sehr hohen thermischen Wirkungsgrad bei hoher Wärmeleistung aus. Infolgedessen besitzt die Vorrichtung auch ein vergleichsweise niedriges Gewicht, das etwa im Bereich von 10% des Gewichts der eingangs diskutierten Vorrichtung aus dem Stand der Technik betragen kann, jedenfalls deutlich unter 30 kg liegt. Die wärmeabgebende Oberfläche der Außenwand kann ebenfalls sehr klein gehalten werden. Darüberhinaus weist die erfindungsgemäß verwendete Vorrichtung eine sehr hohe Druckfestigkeit auch für Temperaturen von weit über 300°C auf. Ferner ist innerhalb des Hohlraums nahezu kein Tot-Volumen ausgebildet, in dem die Zirkulation des Temperierfluid unterbunden ist. Zu dem kann durch geeignet Anordnung der Innen-Verbindungsstellen auf sehr einfache Weise eine Optimierung der Strömung des Temperierfluids erfolgen.

Die Erfindung wird nun anhand von Ausführungsbeispielen und den Figuren der Zeichnung näher erläutert, in der ein bevorzugtes Ausführungsbeispiel dargestellt ist. Funktionsgleiche Teile sind in den einzelnen Figuren mit denselben Bezugszeichen versehen, jedoch in nachfolgenden Figuren nur dann wiederholt, wenn es sinnvoll erscheint.
- Fig. 1, 2: zeigen schematisch eine aus dem Stand der Technik bekannte Vorrichtung zum Temperieren eines In-Line-Meßgeräts,
- Fig. 3, 4: zeigen für die Vorrichtung von Fig. 1, 2 experimetell ermittelte Meßdaten,
- Fig. 5, 6: zeigen schematisch ein Ausführungsbeispiel einer Vorrichtung zum Temperieren eines In-Line-Meßgeräts mittels Wärmetauschern,
- Fig. 7-10: zeigen Einzelheiten eines In-Line-Meßgeräts, das für die Vorrichtung von Fig. 5, 6 geeignet ist,
- Fig. 14-17: zeigen Komponeneten und Einzelheiten von für die Vorrichtung von Fig. 5, 6 geeigneten Wärmetauschern, und
- Fig. 18-19: zeigen für die Vorrichtung von Fig. 5, 6 experimetell ermittelte Messdaten.

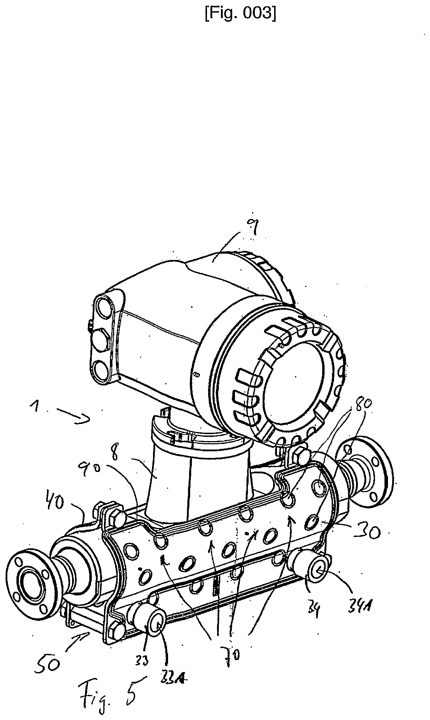

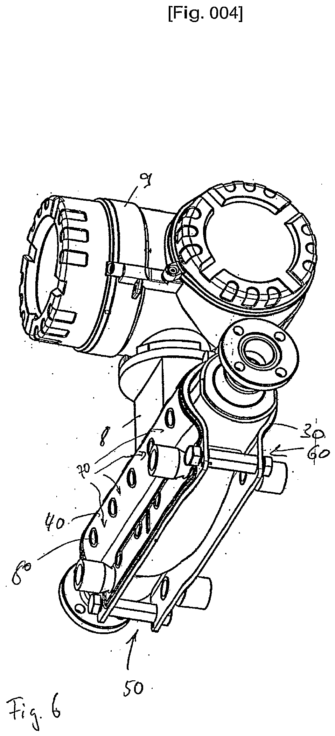

In den Fig. 5 und 6 ist eine Vorrichtung zum Temperieren eines als In-Line-Meßgerät ausgeführten Prozeß-Meßgerät 1 dargestellt. Das Prozeß-Meßgerät 1 dient dazu, wenigstens eine, insb. physikalische, Meßgröße, z.B. einen Massedurchfluß, eine Dichte und/oder eine Viskosität, eines in einer Rohrleitung geführten Mediums zu erfassen und in einen diese Meßgröße momentan repräsentierenden Meßwertsignal abzubilden; die Rohrleitung ist aus Übersichtlichkeitsgründen hier nicht dargestellt. Als In-Line-Meßgerät kann beispielsweise ein solches dienen, das die Meßgröße mittels eines, bevorzugt innerhalb eines Meßaufnehmer-Gehäuses 7, 6 untergebrachten, Meßaufnehmers 10 vom Vibrationstyp sowie mittels einer, vorzugsweise in einem Elektronik-Gehäuse 9 untergebrachten, mit dem Meßaufnehmer 10 elektrisch verbundene Meßgerät-Elektronik 20 erfaßt. Die Vorrichtung dient dazu, eine Temepratur des In-Line-Meßgerät und somit auch eine Temperatur des durch das In-Line-Meßgeräten geführten Mediums innerhalb eines vorgebene Temepraturbereichs zu halten.

Zum Führen des Mediums umfaßt ein solcher Meßaufnehmer wenigstens ein mit der Rohrleitung kommunizierendes Meßrohr, das in einem Trägerrahmen schwingfähig gehaltert ist. Im Betrieb wird das Messrohr, wie bei derartigen Messaufnehmem üblich, in einem geeigneten Schwingungsmode so vibrieren gelassen, daß im hindurchströmenden Fluid solche mit der Meßgröße korrespondierende Reaktionskräfte, wie z.B. Coriolis-Kräfte, Beschleunigungskräfte und/oder Reibungskräfte, von ausreichender Höhe erzeugt werden, die auf das vibrierende Messrohr, beispielsweise auf eine Schwingungsform und/oder eine Schwingungsfrequenz des Messrohrs, in messbarer, also sensorisch erfassbar und elektronisch auswertbarer Weise zurückwirken. Zum Antreiben des Meßrohrs umfaßt der Meßaufnehmer 1 mindestens einen, insb. elektrodynamischen, Schwingungserreger 113. Dieser dient dazu, eine, von der Messgerät-Elektronik 20 eingespeiste, elektrische Erregerleistung *P_{exc}* in solche, z.B. pulsierenden oder harmonischen, Erregerkräfte *F_{exc}* umzuwandeln, die auf das wenigstens eine Meßrohr einwirken und somit die geeignete Schwingungen des Meßrohrs erzeugen. Die Erregerkräfte *F_{exc}* können in der dem Fachmann bekannten Weise z.B. mittels einer Strom- und/ oder Spannungs-Regelschaltung, hinsichtlich ihrer Amplitude und, z.B. mittels einer Phasen-Regelschleife, hinsichtlich ihrer Frequenz eingestellt werden, vgl. hierzu auch die US-A 48 01 897. Als Messsignal dienen bei Messaufnehmern vom Vibrationstyp mittels einer Sensoranordnung erzeugte Schwingungsmesssignale S114 und/oder S115, die Schwingungen des wenigstens einen Messrohrs geeignet repräsentieren. Speziell die Bestimmung des Massendurchflusses, der Dichte und/oder der Viskosität unter Verwendung eines oder mehrerer solcher Schwingungen des vibrierenden Messrohrs repräsentierenden Schwingungsmesssignale ist dem Fachmann an und für sich bekannt und bedarf daher an dieser Stelle keinerlei weitergehender Erläuterungen. Exemplarisch sei hierzu auf die EP-A 1 291 639, der US-B 66 51 513, US-B 65 13 393, US-A 60 06 609, der US-A 56 87 100, der US-A 56 48 616, der US-A 55 97 949, der US-A 53 59 881, der US-A 53 17 928, der US-A 52 95 084, der US-A 49 96 871, der US-A 49 84 472, der US-A 48 76 879, der US-A 45 24 610 oder der WO-A 9516897 verwiesen.

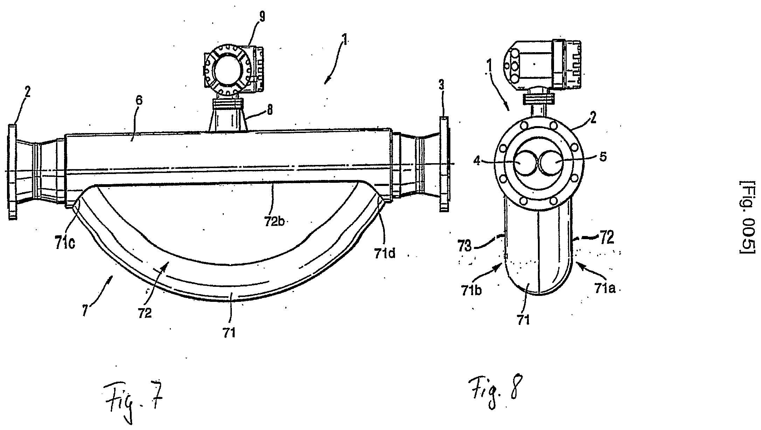

Ein Ausführungsbeispiel für ein In-Line-Meßgerät mit einem, insb. als Coriolis-Massedurchfluss-, als Dichte- und/oder als Viskositäts-Aufnehmer dienenden, Messaufnehmer vom Vibrationstyp ist in den Fig. 7 bis 10 gezeigt, die im Folgenden gemeinsam erläutert werden. Weitere Beispiele für geeignete Ausführungsformen von Messaufnehmern vom Vibrationstyp können u.a. auch den eingangs referierten US-B 66 91 583, US-B 64 50 042, US-B 63 54 154, US-B 63 08 580, US-A 60 06 609, US-A 59 79 246, US-A 58 50 039, US-A 57 96 011, US-A 56 02 345, US-A 53 01 557, US-A 47 68 384, WO-A 03 095 950, WO-A 03 095 949 oder WO-A 95 16 897 entnommen werden.

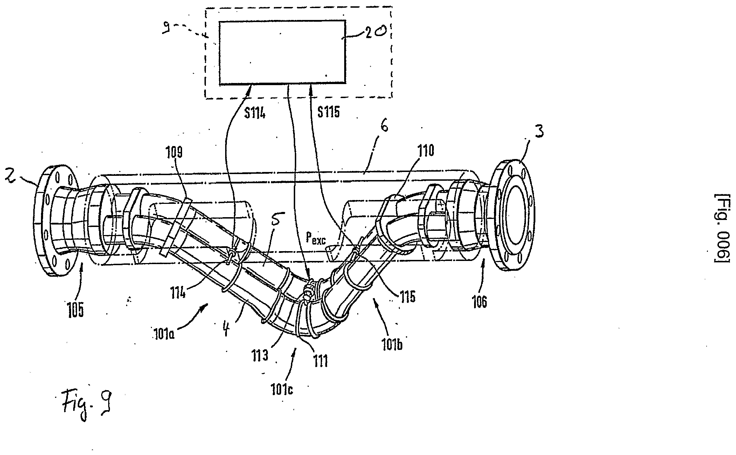

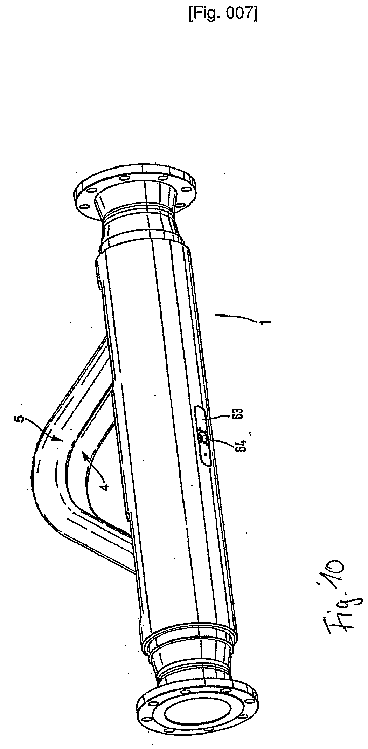

Im hier gezeigten Ausführungsbeispiel umfaßt der Meßaufnehmer 1 ein gekrümmtes erstes Meßrohr 4, das, wie aus den Fig. 9 und 10 ohne weiteres ersichtlich, so geformt ist, daß es einlaßseitig ein erstes gerades Rohrsegment 101a und auslaßseitig ein zweites gerades Rohrsegment 101b aufweist. Die beiden geraden Rohrsegment 101a, 101b stehen über ein bogenförmiges, z.B. kreisbogenförmiges, Rohrsegment 101c von vorgebbarer Raumform miteinander in Verbindung, und zwar bevorzugt so zueinander ausgerichtet, daß das Meßrohr 4 praktisch eine ebenen Fläche aufspannt. Als Material für das Meßrohr 4 kommen praktisch alle herkömmlicherweise bei solchen Meßrohren verwendeten Werkstoffe in Frage, wie z.B. Edelstahl-, Titan-, Tantal- oder Zirkonium-Legierungen etc. Anstelle des hier im wesentlichen V-förmig gebogen gezeigten Messrohrs 4 können praktisch auch alle anderen für derartige In-Line-Meßgeräte geeigneten Messrohre gewählt werden. Weitere geeignete Raumformen für das Meßrohr 4 können ferner z.B. den eingangs referierten US-A 57 31 527, US-A 53 01 557, US-A 48 95 030, WO-A 01/ 33 174 oder WO-A 00/ 57 141 entnommen werden.

Wie in der Fig. 9 dargestellt, mündet das Meßrohr 4 mit einem Einlaßende in ein Einlaßrohrstück 103 und mit einem Auslaßende in ein Auslaßrohrstück 104. Einlaßrohrstück 103 und Auslaßrohrstück 104 stehen bei eingebautem Meßgerät jeweils mit einem einlaßseitigen bzw. auslaßseitigen Abschnitt der Fluid führenden und üblicherweise geraden Rohrleitung in Verbindung. Die beiden Rohrstücke 103, 104 sind daher bevorzugt zueinander und zu einer die beiden imaginär verbindenden Längsachse A₁ des Meßaufnehmers fluchtend ausgerichtet. In vorteilhafter Weise können das Meßrohr 4 sowie das Einlaß- und das Auslaßrohrstück 103, 104 aus einem einzigen rohrförmigen Halbzeug von entsprechender Länge gefertigt sein.

Für den Fall, daß der Meßaufnehmer lösbar in die Rohrleitung zu montieren ist, ist dem Einlaßrohrstück 103 ein noch erster Flansch 2 und dem Auslaßrohrstück 3 ein zweiter Flansch 108 angeformt, wobei die Flansche 2, 3 gleichermaßen auch am Trägerrahmen 6 fixiert sind. Anstatt mittels Flanschen 2, 3 kann der Meßaufnehmer 1 an die erwähnte Rohrleitung auch in einer anderen dem Fachmann bekannten Weise angeschlossen werden, z.B. mittels Triclamp-Anschlüssen oder Schraubverbindungen; falls erforderlich können Einlaßrohrstück 103 und Auslaßrohrstück 104 aber auch direkt mit der Rohrleitung z.B. mittels Schweißung oder Hartlötung, verbunden werden.

Neben dem ersten Meßrohr 4 umfaßt der Meßaufnehmer 1 im hier gezeigten Ausführungsbeispiel ferner ein, insb. zum Meßrohr 4 identisches und parallel verlaufendes, zweites Meßrohr 5, das im Betrieb gleichfalls vom zu messenden Medium durchströmt ist und ebenfalls vibrieren gelassen wird. Dementsprechend münden beim Meßaufnehmer des Ausführungsbeispiels das Einlaßrohrstück 103 in ein Einlaßverteilerstück 105 und das Auslaßrohrstück 104 in ein entsprechendes Auslaßverteilerstück 106, so daß das Meßrohr 4 im Betrieb via Einlaß- und Auslaßrohrstück 103, 104 sowie Einlaß- und Auslaßverteilerstück 105, 106 mit der angeschlossenen Rohrleitung kommuniziert. Analog dazu steht auch das Meßrohr 5 über das Einlaß- und das Auslaßverteilerstück 105, 106 mit der Rohrleitung in Verbindung. Falls erforderlich, können allfällige, von den vibrierenden Meßrohren 101, 102 im Einlaßrohrstück 103 und Auslaßrohrstück 104 verursachte mechanische Spannungen z.B. dadurch minimiert werden, daß die Meßrohre 101, 102, wie bei derartigen Meßaufnehmern üblich, einlaßseitig mittels wenigstens einer ersten Knotenplatte 109 und auslaßseitig mittels wenigstens einer zweiten Knotenplatte 110 miteinander mechanisch verbunden sind. Es sei noch erwähnt, daß anstelle von Messaufnehmern mit zwei im Betrieb vom zu messenden Medium durchströmten Messrohren aber auch solche Meßaufnehmer vom Vibrationstyp verwendet werden können, die wie auch in der US-A 60 06 609, der US-A 55 49 009 oder US-B 66 66 098 beschrieben, nur ein einziges Meßrohr aufweisen.

Die Meßrohre 4, 5 sind schließlich von einem, vorzugsweise metallischen, Gehäuse umhüllt, das aus einem Trägerrahmen 6 und aus einer Gehäusekappe 7 gebildet ist. Das Gehäuse dient einerseits dazu, die innenliegenden Bauteile des Messaufnehmers 1, wie z.B. das Meßrohr 4, die Erreger- und die Sensoranordnung etc., vor äußeren Umwelteinflüssen, wie z.B. Staub oder Spritzwasser, zu schützen. Andererseits aber dient das Gehäuse auch dazu, bei allfälligen Schäden am Meßrohr 4 oder ggf. am Meßrohr 5, z.B. durch Rißbildung oder Bersten, ausströmendes Fluid bis zu einem geforderten maximalen Überdruck im Inneren des Gehäuses möglichst vollständig zurückzuhalten. Zudem können mittels des Gehäuse vom vibrierenden ausgehende Schallemissionen wirksam unterdrückt wirden. Als Material für das Gehäuse, insb. auch die Gehäusekappe 7, ist daher z.B. Baustahl oder aber auch rostfreier Stahl geeignet.

Wie in Fig. 9 und 10 dargestellt, sind die Meßrohre 4, 5 im, hier im wesentlichen rohrförmigen, Trägerrahmen 6 einlaß- und auslaßseitig so gehaltert, daß sie, durch zwei Ausnehmungen 61, 62 des Trägerrahmens 6 verlaufend, seitwärts aus dem Trägerrahmen 6 heraus- und somit in die am Trägerrahmen 6 fixierte Gehäusekappe 7 hineinragen. Die dem Einhausen des Rohrsegments 41 dienende Gehäusekappe 7 umfaßt, wie in Fig. 7 und 8 schematisch dargestellt, ein rinnenförmiges erstes Kappensegment 71 sowie ein im wesentlichen ebenes zweites Kappensegment 72 und ein zu diesem im wesentlichen spiegelsymmetrisches drittes Kappensegment 73. Die Form des Kappensegments 71 entspricht, wie aus Fig. 3 ohne weiteres ersichtlich, im wesentlichen der einer toroidalen Schale. Dementsprechend weist das Kappensegment 71 einen im wesentlichen kreisbogenförmigen, bevorzugt halbkreisförmigen, Querschnitt von vorgebbarem erstem Radius r auf und, zumindest virtuell, einen im wesentlichen kreisbogenförmigen ersten Segmentrand 71a mit einem im Vergleich zum ersten Radius r wesentlich größeren zweiten Radius R sowie einem zum ersten Segmentrand im wesentlichen identisch geformten zweiten Segmentrand 71b. Falls erforderlich, kann sowohl der Querschnitt als auch der Segmentrand nicht ideal-kreisförmig, also leicht elliptisch geformt sein, zumindest insoweit, als eine Elastizität und/oder Duktilität des Materials der Gehäusekappe 7 so gewählt ist, daß die Gehäusekappe 7 auf einen steigenden Innendruck allenfalls mit einer Anpassung der Form des Kappensegments 71 an die einer idealen Torusschale reagiert.

In den Fig. 7 und 8 ist schließlich noch ein am Trägerrahmen 6 mittels eines halsartigen Übergangsstücks 8 fixiertes Elektronik-Gehäuse 9 gezeigt, in dem sich eine Messgerät-Elektronik des In-Line-Meßgeräts befindet; diese erzeugt einerseits ein die erwähnte Erregeranordnung speisendes Erregersignal, andererseits empfängt die Mess- und Betriebsschaltung die Signale der erwähnten Sensoranordnung und generiert daraus gewünschte, den Massedurchfluss, die Dichte, die Viskosität oder die Temperatur des strömenden Fluids repräsentierende Signale, die weiterverarbeitet oder angezeigt werden können. In der Fig. 10 sind das Übergangsstück 8 und das Elektronik-Gehäuse 9 weggelassen, so daß eine Ansatzfläche 63 für das Übergangsstück 8 zu sehen ist. In der Ansatzfläche 63 ist eine elektrische Durchführung 64 angeordnet, mittels der elektrische Verbindungen zur oben er-wähnten Erregeranordnung und zu den oben erwähnten Sensoranordnung sowie gegebenenfalls weiteren elektrischen Komponenten, wie z.B. Temperatursensoren, herstellbar sind.

Beim hier gezeigten Messaufnehmer werden die Meßrohre 4, 5 mittels des Schwingungserregers 113 zu auslegerartigen Vibrationen angeregt, bei denen beide Messrohre 4, 5, nach der Art zweier Stimmgabelzinken zueinander im wesentlichen gegenphasig schwingen und so jeweils lateral ausgelenkt werden. Die Erregeranordnung 113 ist dafür vorzugsweise an einem jeweiligen Scheitelpunkt der beeiden Messrohre 4, 5 fixiert. Zum Erfassen von Vibrationen der Messrohre 4, 5 sind ferner zwei, insb. elektrodynamische, Schwingungsesnoren 114, 115 vorgesehen, mittels denen in der für derartige Meßaufnehmer üblichen Weise, insb. einlaß- und auslaßseitige, Vibrationen der Messrohr 4, 5 geeignet repräsentierende Schwingungsmesssignale S114, S115 erzeugt werden. Die Schwingungsmesssignale S114, S115 sind, wie in Fig. 9 schematisiert dargestellt, für eine elektronische Weiterverarbeitung der Messgerät-Elektronik 20 entsprechend zugeführt.

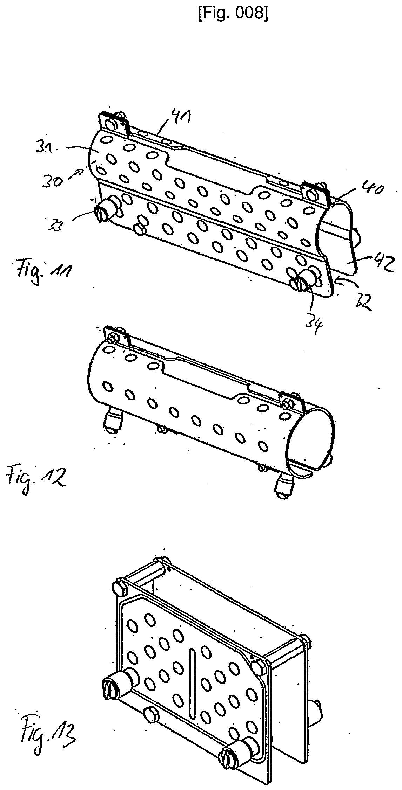

Die erfindungsgemäße Vorrichtung zum Temeprieren des In-Line-Meßgeräts umfasst, wie in Fig. 5 und 6 dargestellt, wenigstens einen am In-Line-Meßgerät befestigten ersten Wärmetauscher 30, der im Betrieb zumindest zeitweise von einem dem Transport von Wärme dienenden Temperierfluid durchströmt ist, sowie entsprechende Befestigungsmittel 50, 60 zum, insb. wieder lösbaren, Fixieren des wenigstens ersten Wärmetauschers 30 außen am In-Line-Meßgerät. Weitere Ausführungsbeispiele für die erfindungsgemäße Vorrichtung bzw. den erfindungsgemäßen Wärmetauscher 30 sind schematisch in den Fig. 11, 12, und 13 gezeigt.

Der Wärmetauscher 30 umfasst wenigstens zwei, insb. aus rostfreiem Stahl oder Edelstahl bestehende, Wärmetauscher-Bleche, von denen ein, insb. rinnen- oder schalenförmig gewölbtes, inneres erstes Wärmetauscher-Blech 32', dazu geeignet ist, das In-Line-Meßgerät im Betrieb von außen in einem vorgebbaren Kontaktbereich zumindest abschnittsweise flächig zu kontaktieren und somit eine, insb. rinnen- oder schalenförmig gewölbte, Innenwand 32 des Wärmetauschers zu bilden, und von denen ein äußeres, am ersten Wärmetauscher-Blech 32' fixiertes zweites Wärmetauscher-Blech 31' eine Außenwand 31 des Wärmetauschers bildet, vgl Fig. 5, 6, 11 und 16. Im in den Fg. 5, 6 gezeigten Ausführungsbeispiel ist der Wärmetauscher 30 -bedingt auch durch das Messprinzip - so am In-Line-Meßgerät angeordnet, daß er das Gehäuse 6, 7 zumindest teilweise flächig kontaktiert. Der Wärmetauscher kann aber auch, insb. bei einem in-Line-Megrät mit einem betriebsgemäß ruhenden und von außen zugänglichen Messrohr, direkt auf dem Messrohr angeordnet werden. Ein solches In-Line-Meßgerät mit ruhendem Messrohr kann beispielsweise ein Druckschwankungen oder Druckdifferenzen im zu messenden Medium auswertendes In-Line-Meßgerät, wie es z.B. auch in der US-B 63 52 000 gezeigt ist, sein.

Die beiden Wärmetauscher-Bleche 31', 32' sind über eine entlang eines Randbereichs verlaufende, für das Temperierfluid dichte Rand-Verbindungsnaht Rand-Verbindungsnaht 90 sowie über eine Vielzahl von, insb. punkt- oder ringförmigen, Innen-Verbindungsstellen 80, die voneinander beabstandet in einem von der Rand-Verbindungsnaht 90 zumindest teilweise umschlossenen Innenbereich angeordnet sind, miteinander verbunden, und zwar so, daß zwischen der Innenwand und der Außenwand wenigstens ein dem Führen des Temperierfluids dienender, eine Vielzahl von miteinander kommunizierenden Hohlraum-Sektionen aufweisender Hohlraum H gebildet ist. Der so gebildete Hohlraum H ist über darin einmündende Öffnungen in ein ein geeignetes Temperierfluid führendes - hier nicht dargestelltes - Temperier-Leitungssystem eingebunden.

Das äußere zweite Wärmetauscher-Blech 31' weist eine, insb. mit der Anzahl der Innen-Verbindungsnähte 80 korrespondierende, Vielzahl von Bereichen 70 auf, in denen das Material des zweiten Wärmetauscher-Blechs derart plastisch verformt ist, daß es unter Bildung des zwischen den beiden Wärmetauscher-Blechen 31', 32' befindlichen Hohlraums H bzw. der oben genannten Hohlraum-Sektionen dauerhaft nach außen hin aufgewölbt ist.

Zumindest bei den Innen-Verbindungsnähten 80 handelt es sich vorzugsweise um hochfeste, kaum zu Korrosion neigende Laser-Schweißnähte. Falls erforderlich kann aber auch die Rand-Verbindungsnaht 90 laser-geschweißt sein.

Zum Anschließen des Wärmetauschers 30 an das Temperier-Leitungssystem sind an wenigstens einem der beiden Wärmetauscher-Bleche, insb. dem äußeren, ein über eine erste Öffnung 33A in den Hohlraum H einmündender Einlaß-Stutzen 33, über den der Wärmetauscher 30 mit einer das Temperierfluid zuführenden - hier nicht gezeigten - ersten Fluidleitung, insb. lösbar, verbindbar ist, und ein über eine zweite Öffnung 34A in den Hohlraum H einmündender Außlaß-Stutzen 34, über den der Wärmetauscher mit einer das Temperierfluid wieder abführenden - ebenfalls nicht gezeigten - zweiten Fluidleitung, insb. lösbar, verbindbar ist, fixiert.

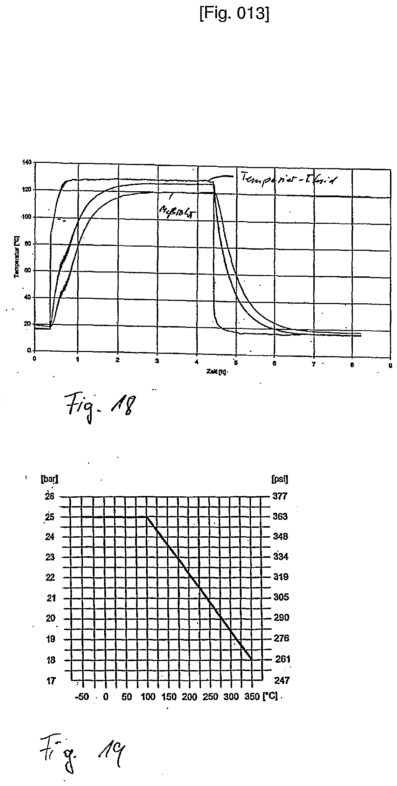

Nach einer Weiterbildung der Erfindung umfasst die Vorrichtung weiters einen, insb. zum ersten Wärmetauscher 30 im wesentlichen baugleich ausgebildeten, zweiten Wärmetauscher 40, wobei die Befestigungsmittel 50, 60 auch dem, insb. wieder lösbaren, Fixieren des zweiten Wärmetauschers 40 außen am In-Line-Meßgerät dienen, vgl. Fig. 5 und 6. An einer solchen, gemäß dieser Weiterbildung der Erfindung konstruierten Vorrichtung durchgeführte Messungen ergaben eine deutliche Verringerung der thermischen Trägheit im Vergleich zu den eingangs diskutierten herkömmlichen Vorrichtungen; dafür entsprechend experimentell ermittelte Messdaten sind in einer mit den Messdaten von Fig. 3 vergleichbaren Weise in Fig. 18 aufgezeigt.

Die beiden Wärmetauscher 30, 40 sind gemäß einer vorteilhaften Ausgestaltung dieser Weiterbildung der Erfindung kraftschlüssig am In-Line-Meßgerät befestigt, wobei die Befestigungsmittel 50, 60 gemäß einer vorteilhaften Ausgestaltung der Erfindung zumindest teilweise als integraler Bestandteil des ersten und/oder des zweiten Wärmetauschers ausgebildet sind. Im hier gezeigten Ausführungsbeispiel sind die beiden Wärmetauscher 30, 40 im wesentlichen dadurch am In-Line-Meßgerät fixiert, daß sie einander gegenübliegend an diesem angeordnete und durch geeignete Schraubverbindungen gegeneinander verspannt und somit nach der Art einer Clampon-Vorrichtung auf das In-Line-Meßgerät praktisch "aufgeschnallt" sind, vgl. die Fig. 5, 6, 11, 12 oder 13. Für den Fall, daß nur der Wärmetauscher 30 allein verwendet werden soll, können als Befestigungsmittel 50, 60 beispielsweise mit entsprechenden Schraubverbindungen montierte Spannschellen dienen.

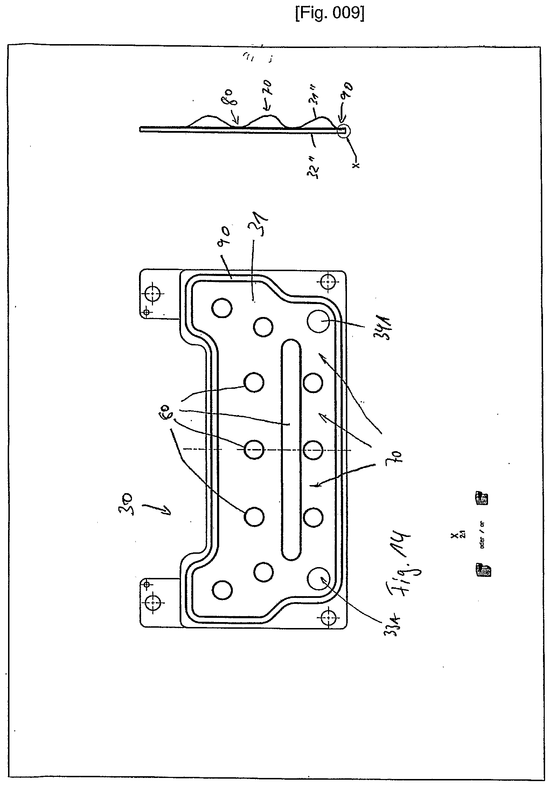

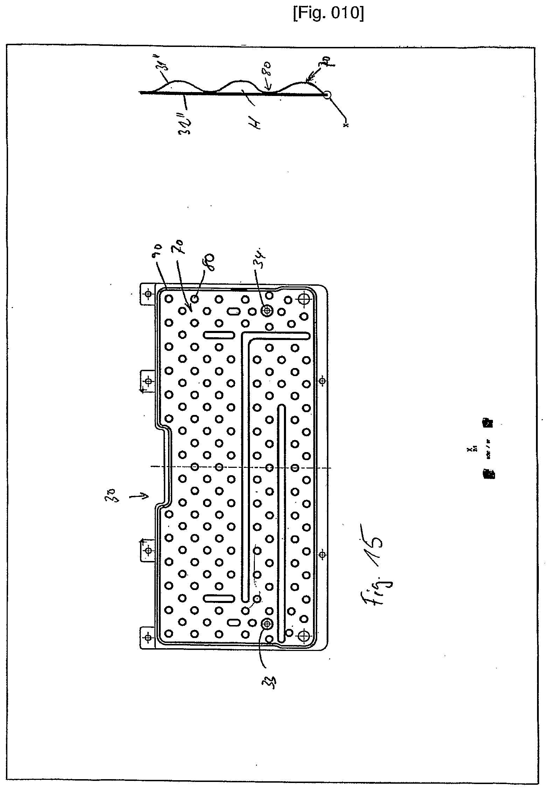

Zum Herstellen des Wärmetauschers 30 werden die für die Anbindung des Wärmetauschers an das Temperier-Leitungssystem vorgesehenen Öffnungen 33A, 34A in einem der Herstellung eines der Wärmetauscher-Bleche dienenden ersten Blechteil 31" erzeugt. Anschließend wird das erste Blechteil 31" auf ein der Herstellunge des anderen der beiden Wärmetauscher-Bleche 31', 32' dienendes, insb. eine von einer Blechdicke des ersten Blechteils 31" verschiedene Blechdicke aufweisendes, zweites Blechteil 32" aufgelegt. Die Rand-Verbindungsnaht 90 sowie die Innen-Verbindungsstellen 80 werden durch entsprechendes Verschweißen, insb. LaserSchweißen, der beiden aufeinandergelegten Blechteile 31", 32" erzeugt, vgl hierzu auch die Fig. 14 und 15. Das Schweißen kann beispielsweise mittels eines geeignet programmierten Schweiß-Automaten oder Schweiß-Roboters erfolgen.

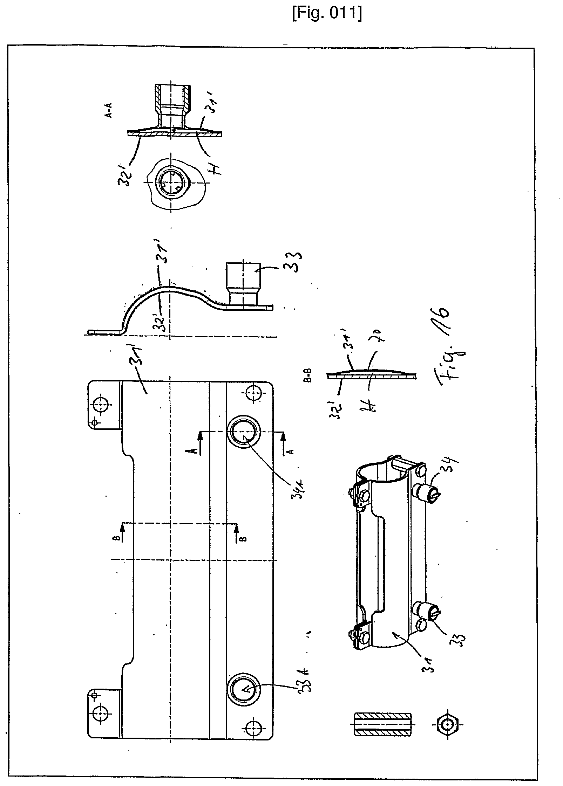

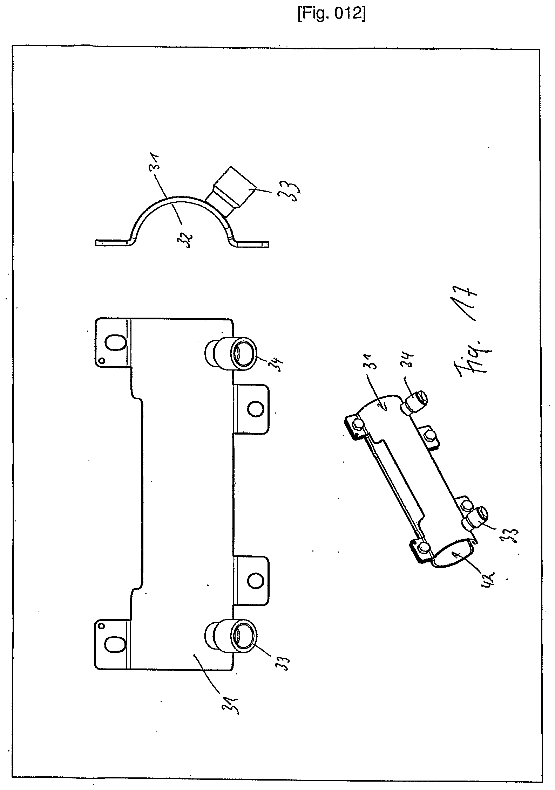

Nunmmehr können die Blechteile 31", 32", beispielsweise durch Biegen oder ein anderes geeignetes, insb. kaltverformendes, Verfahren, an die äußere Kontur des In-Line-Megeräts angepaß werden, vgl. hierzu auch die Fig. 16 oder 17. Demgemäß werden die Blechteile so verformt, daß das als inneres erstes Wärmetauscher-Blech 32' dienende Blechteil 32" zumindest abschnittsweise eine mit einer äußeren Form des am In-Line-Meßgerät vorgesehenen Kontaktbereichs korrespondierende Raumform aufweist. Danach können Einlaß-Stutzen 33 und Auslaß-Stutzen 34, beispielsweise durch Schweißen, an der jeweils zugehörigen Öffnung 33A, 34A im Blechteil 31" oder 32" angebracht werden.

Zum Erzeugen der für den Hohlraum 70 gewünschten Form, insb. der oben erwähnten Bereiche 70 in der Außenwand wird weitgehend inkompressibles Fluid, insb. Wasser, Öl oder dergleichen, in einen zwischen den beiden miteinander verbundenen Blechteilen 31", 32" belassenen Hohlraum H' über die erste Öffnung 33A mittels einer an den Einlaß-Stutzen 33 angeschlossenen Druckleitung eingeleitete. Gleichermaßen wird der Hohlraum über die zweite Öffnung entlüftet. Nach dem der Hohlraum H' vollständig mit dem inkompressiblen Fluid gefüllt ist, wird der Auslaßstutzen 34 druckdicht verschlossen und wird das im Hohlraum H' befindliche Fluid, beispielsweise durch weitere Zufuhr von unter hohem Druck stehendem Fluid, mit einem statischen Druck beaufschlagt, der einen statischen Druck einer umgebenden Atmosphäre in einem solchen Maße, insb. mit mehr als 100 bar, übersteigt, daß ein Aufweiten des Hohlraums H' einsetzt. Mittels des mit Druck beaufschlagten Fluids wird der Hohlraum H' aufgeweitet und somit ein plastisches Verformen des Materials der Blechteile 31", 32" erreicht. Der statische Druck wird solange gehalten oder ggf. weiter erhöht, bis die für den Hohlraums H gewünschte Form erreicht ist.

Durch die Anwendung des erfindungsgemäßen Verfahrens kann neben einer erheblichen Vereinfachung der Fertigung erreicht werden, daß die so hergestellten Wärmetauscher 30, 40 allerhöchsten Anforderungen an die Prüfung der Druckfestigkeit genügen können. Durch das Beaufschlagen des in den Hohlraum H' eingeleiteten Fluids erfolgt nämlich gleichzeitig zum Verformen des Hohlraums H' jeweils auch eine Druckprüfung jedes einzelnen Wärmetauschers, insb. auch jeder der Rand-Verbindungsnähte 90 wie auch der Innen-Verbindunstellen 80. Infolge des aufgewendeten hohen Drucks - hier mindestens 100 bar - kann eine solche Stückprüfung jedes einzelnen Wärmetauschers sehr hohen Sicherheitsanforderungen genügen. Ein Vergleich der Messkurven von Fig. 4 mit den für einen in der vorbeschriebenen Weise gefertigten Wärmetauscher experimentell ermittelten Messdaten, dargestellt in Fig. 19, zeigt zum einen ein deutliche Erhöhung der Druckfestigkeit. Zum anderen lässt sich auch eine erhebliche Ausdehnung des nutzbaren Temperaturbereichs feststellen; beispielsweise können für die untersuchte Vorrichtung, selbst bei geforderter 4-facher Sicherheit, bei 300°C immer noch Druckfestigkeiten von mehr als 4 bar ohne weiteres garantiert werden, was einer nominellen Druckfestigkeit von über 16 bar entspricht.

Die erfindungsgemäße Vorrichtung ist daher im besonderen auch für solche Anwendungen im Hochtemperaturbereich geeignet, wie sie beispielsweise in den eingangs erwähnten US-A 48 76 898, WO-A 02 088 641 oder auch der eigenen, nicht vorveröffentlichten PCT/EP2004/002792 beschrieben sind.

Durch die Verwendung von Blechteilen 31", 32" mit voneinander verschiedenen Blechdicken zur Herstellung der Wärmetauscher-Bleche 31', 32' kann auf sehr einfache Weise sichergestellt werden, daß durch das den Hohlraum H' verformende Fluid vornehmlich nur eines der beiden Blechteile 31" oder 32" plastisch verformt wird, während das andere nahezu in seiner Ausgangsform belassen wird. Dementsprechend wird die Blechdicke des inneren Wärmetauscher-Blechs 32' größer gewählt als die Blechdicke des äußeren Wärmetauscher-Blechs 31'.

In vorteilhafter Weise wird vor dem Fixieren des Einlaß-Stutzens 33 oder des Auslaß-Stutzens 34 am ersten Blechteil 31" ein Rand der jeweiligen Öffnung aufgebogen und/oder aufgebördelt, so daß zum einen eine gute Kontaktfläche zum Anschweißen der Stutzen am Blechteil 31" erzeugt und zum anderen ein fluiddichtes Verschließen des Hohlraums H' im Bereich des Randes sicher vermieden werden kann, vgl. hierzu auch die Fig. 16. Darüberhinaus kann der aufgebogene Rand zu dessen Stabilisierung punktweise an einem gegenüberliegenden Abschnitt des zweiten Blechteils 32" fixiert, insb. angeschweißt, werden.

## Patentansprüche

1. Verwendung eines In-Line-Meßgeräts zum Erfassen wenigstens einer, insb. physikalische, Meßgröße, insb. einen Massedurchfluß, eine Dichte und/oder eine Viskosität, eines in einer Rohrleitung geführten Mediums und zum Abbilden der wenigstens einen Meßgröße in ein diese momentan repräsentierendes Meßwertsignal sowie einer Vorrichtung zum Temperieren des In-Line-Meßgeräts (1),
- wobei das In-Line-Meßgerät (1) einen, insb. innerhalb eines Meßaufnehmer-Gehäuses (6, 7) untergebrachten, Meßaufnehmer (10) vom Vibrationstyp umfasst;
- und wobei die Vorrichtung umfasst:
-- wenigstens einen am In-Line-Meßgerät befestigten ersten Wärmetauscher (30), der im Betrieb zumindest zeitweise von einem dem Transport von Wärme dienenden Temperierfluid durchströmt ist, sowie
-- Befestigungsmittel (50, 60) zum, insb. wieder lösbaren, Fixieren des wenigstens ersten Wärmetauschers (30) außen am In-Line-Meßgerät (1),
- wobei der Wärmetauscher (30) eine das In-Line-Meßgerät (1) von außen zumindest teilweise flächig kontaktierende, insb. rinnen- oder schalenförmig gewölbte, Innenwand (32) sowie eine daran fixierte Außenwand (31) aufweist;
**dadurch gekennzeichnet, daß** die Außenwand (31) mit der Innenwand (32) über eine entlang eines Randbereichs verlaufende, für das Temperierfluid dichte Rand-Verbindungsnaht (90) sowie über eine Vielzahl von, insb. punkt- oder ringförmigen, Innen-Verbindungsstellen (80), die voneinander beabstandet in einem von der Rand-Verbindungsnaht (90) zumindest teilweise umschlossenen Innenbereich angeordnet sind, derart verbunden ist, daß zwischen der Innenwand (32) und der Außenwand (31) wenigstens ein dem Führen des Temperierfluids dienender, eine Vielzahl von miteinander kommunizierenden Sektionen aufweisender Hohlraum (H) gebildet ist, wobei der Hohlraum (H) über darin einmündende Öffnungen (33A, 34A) in ein das Temperierfluid führendes Temperier-Leitungssystem eingebunden ist.

2. Verwendung nach Anspruch 1, bei der der erste Wärmetauscher (30) der Vorrichtung im wesentlichen kraftschlüssig am In-Line-Meßgerät (1) befestigt ist.

3. Verwendung nach Anspruch 1 oder 2, wobei die Vorrichtung weiters umfaßt: einen, insb. zum ersten Wärmetauscher (30) im wesentlichen baugleich ausgebildeten, zweiten Wärmetauscher (40), wobei die Befestigungsmittel (50, 60) auch dem, insb. wieder lösbaren, Fixieren des zweiten Wärmetauschers (40) außen am In-Line-Meßgerät (1) dienen.

4. Verwendung nach Anspruch 3, wobei die Befestigungsmittel (50, 60) der Vorrichtung dem kraftschlüssigen Fixieren der beiden Wärmetauscher (30, 40) dienen.

5. Verwendung nach Anspruch 3 oder 4, wobei die Befestigungsmittel der Vorrichtung zumindest teilweise als intgraler Bestandteil des ersten und/oder des zweiten Wärmetauschers (30, 40) ausgebildet sind.

6. Verwendung nach einem der Ansprüche 3 bis 5, wobei die beiden Wärmetauscher (30, 40) der Vorrichtung mittels der Befestigungsmittel (50, 60) miteinander mechanisch verbunden sind.

7. Verwendung nach Anspruch 3 oder 4, wobei die beiden Wärmetauscher (30, 40) der Vorrichtung einander gegenübeliegend am In-Line-Meßgeräts (1) angeordnet sind.

8. Verwendung gemäß einem der vorherigen Ansprüche, wobei das zu temperierende In-Line-Meßgerät (1) wenigstens ein in den Verlauf der Rohrleitung eingesetztes Messrohr (4, 5) umfasst.

9. Verwendung einer Vorrichtung gemäß dem vorherigen Anspruch,
- wobei das zu temperierende In-Line-Meßgerät weiters ein das wenigstens eine Messrohr umhüllendes Gehäuse umfasst, und
- wobei wenigstens der erste Wärmetauscher das Gehäuse zumindest teilweise flächig kontaktiert.

10. Verwendung einer Vorrichtung gemäß dem vorherigen Anspruch, wobei das wenigstens eine Messrohr zum Messen der wenigstens einen physikalischen Meßgröße des in der Rohrleitung strömenden Mediums vibrieren gelassen wird.

## Claims

1. Use of an inline measuring device designed to measure at least a measured variable, particularly a physical measured variable, particularly a mass flow, a density and/or a viscosity of a medium conducted in a pipe, and designed to map the at least one measured variable to a measured value signal currently representing said measured variable, as well as an apparatus designed for the temperature-control of the inline measuring device (1),
- wherein the inline measuring device (1) comprises a vibronic-type sensor (10), particularly accommodated within a sensor housing (6, 7),
- and wherein the apparatus comprises:
-- at least a first heat exchanger (30) fixed on the inline measuring device (1), wherein temperature-control fluid designed to transport heat flows through said heat exchanger during operation, as well as
-- fastening elements (50, 60) designed to fix the at least first heat exchanger (30) on the outside of the inline measuring device (1), particularly in a detachable manner
-- wherein the heat exchanger (30) has an interior wall (32), particularly curved in the form of a channel or shell, which is in at least partially in contact with the inline measuring device (1) from the outside over a large surface area, as well as an exterior wall (31) fixed on said interior wall;
**characterized in that**
the exterior wall (31) is connected to the interior wall (32) - via a marginal connecting seam (90) which is leak-tight in relation to the temperature-control fluid and extends along a marginal area, as well as via a multitude of internal connection points (80), particularly punctiform or annular, which are arranged at a distance from one another in an interior area that is at least partially enclosed by the marginal connecting seam (90) - in such a way that at least a cavity (H) is formed between the interior wall (32) and exterior wall (31), said cavity (H) having several sections that communicate with one another and serving to conduct the temperature-control fluid, wherein the cavity (H) is integrated into a temperature-control pipe system that conducts the temperature-control fluid by means of openings (33A, 34A) that enter into the cavity.

2. Use as claimed in Claim 1, wherein the first heat exchanger (30) of the apparatus is essentially secured on the inline measuring device (1) by a force-fitting connection.

3. Use as claimed in Claim 1 or 2, wherein the apparatus further comprises: a second heat exchanger, particularly essentially identical in design to the first heat exchanger (30), wherein the fastening elements (50, 60) also serve to fix the second heat exchanger (40) on the outside of the inline measuring device (1), particularly in a detachable manner.

4. Use as claimed in Claim 3, wherein the fastening elements (50, 60) of the apparatus serve to fix the two heat exchangers (30, 40) in a force-fit manner.

5. Use as claimed in Claim 3 or 4, wherein the fastening elements of the apparatus are at least partially designed as an integral part of the first and/or second heat exchanger (30, 40).

6. Use as claimed in one of the Claims 3 to 5, wherein the two heat exchangers (30, 40) of the apparatus are mechanically connected to one another by means of the fastening elements (50, 60).

7. Use as claimed in Claim 3 or 4, wherein the two heat exchangers (30, 40) of the apparatus are arranged opposite one another on the inline measuring device (1).

8. Use as claimed in one of the previous claims, wherein the inline measuring device (1) to be temperature-controlled comprises at least one measuring tube (4, 5) inserted in the course of the pipe.

9. Use of an apparatus as claimed in the previous claim,
- wherein the inline measuring device to be temperature-controlled further comprises a housing that encases the at least one measuring tube, and
- wherein at least the first heat exchanger at least partially contacts the housing over a large surface area.

10. Use of an apparatus as claimed in the previous claim, wherein the at least one measuring tube for measuring the at least one physical measured variable of the medium flowing through the pipe is excited to vibrate.

## Revendications

1. Utilisation d'un appareil en ligne destiné à la mesure d'au moins une grandeur de mesure, notamment physique, notamment un débit massique, une densité et/ou une viscosité d'un produit acheminé dans une conduite, et destiné à la reproduction de l'au moins une grandeur de mesure en un signal de valeur mesurée représentant momentanée la grandeur, ainsi que d'un dispositif destiné à réguler en température l'appareil de mesure en ligne (1),
- pour laquelle l'appareil de mesure en ligne (1) comprend un capteur (10) du type à vibrations, notamment logé à l'intérieur d'un boîtier de capteur (6, 7),
- et pour laquelle le dispositif comprend :
-- au moins un premier échangeur thermique (30) fixé sur l'appareil de mesure en ligne (1), lequel échangeur est parcouru, en fonctionnement, au moins temporairement par un fluide de régulation de température servant au transport de la chaleur,
ainsi que
-- des moyens de fixation (50, 60) destinés à la fixation, notamment amovible, de l'au moins premier échangeur thermique (30) à l'extérieur sur l'appareil de mesure en ligne (1),
- pour laquelle l'échangeur thermique (30) présente une paroi intérieure courbe (32) en forme de gouttière ou de coquille, entrant en contact sur une grande surface au moins partiellement avec l'extérieur de l'appareil de mesure en ligne (1), ainsi qu'une paroi extérieure (31) fixée à la paroi intérieure ;
**caractérisée**
**en ce que** la paroi extérieure (31) est reliée avec la paroi intérieure (32) - à travers un cordon de liaison marginal (90) étanche au fluide de régulation de température, lequel cordon s'étend le long d'une zone marginale, ainsi qu'à travers un grand nombre de points de liaison internes (80), notamment en forme de points ou d'anneaux, lesquels points sont disposés de façon espacée les uns des autres dans une zone intérieure entourée au moins partiellement par le cordon de liaison marginal (90) - de telle sorte qu'est formé, entre la paroi intérieure (32) et la paroi extérieure (31), au moins un espace creux (H) présentant un grand nombre de sections communiquant entre elles et servant à guider le fluide de régulation de température, l'espace creux (H) étant intégré dans un système de conduite de régulation de température guidant le fluide de régulation de température à travers des ouvertures (33A, 34A) débouchant dans l'espace creux.

2. Utilisation selon la revendication 1, pour laquelle le premier échangeur thermique (30) du dispositif est fixé pour l'essentiel par liaison de force sur l'appareil de mesure en ligne (1).

3. Utilisation selon la revendication 1 ou 2, pour laquelle le dispositif comprend en outre : un deuxième échangeur thermique, notamment de conception pour l'essentiel identique avec celle du premier échangeur thermique (30), les moyens de fixation (50, 60) servant également à la fixation, notamment amovible, du deuxième échangeur thermique (40) à l'extérieur sur l'appareil de mesure en ligne (1).

4. Utilisation selon la revendication 3, pour laquelle les moyens de fixation (50, 60) du dispositif servent à la fixation par liaison de force des deux échangeurs thermiques (30, 40).

5. Utilisation selon la revendication 3 ou 4, pour laquelle les moyens de fixation du dispositif sont conçus au moins partiellement en tant que partie intégrante du premier et/ou du deuxième échangeur thermique (30, 40).

6. Utilisation selon l'une des revendications 3 à 5, pour laquelle les deux échangeurs thermiques (30, 40) du dispositif sont reliés mécaniquement entre eux à l'aide des moyens de fixation (50, 60).

7. Utilisation selon la revendication 3 ou 4, pour laquelle les deux échangeurs thermiques (30, 40) du dispositif sont disposés en opposition l'un par rapport à l'autre sur l'appareil de mesure en ligne (1).

8. Utilisation selon l'une des revendications précédentes, pour laquelle l'appareil de mesure en ligne (1) à réguler en température comprend au moins un tube de mesure (4, 5) inséré dans le tracé de la conduite.

9. Utilisation d'un dispositif selon la revendication précédente,
- pour laquelle l'appareil de mesure en ligne à réguler en température comprend en outre un boîtier enveloppant l'au moins un tube de mesure, et
- pour laquelle au moins le premier échangeur thermique entre partiellement en contact sur une grande surface avec le boîtier.

10. Utilisation d'un dispositif selon la revendication précédente, pour lequel l'au moins un tube de mesure, destiné à la mesure de l'au moins une grandeur de mesure physique du produit s'écoulant dans la conduite, est excité en vibrations.
